Europäisches Patentamt

European Patent Office

Office européen des brevets

(19)

(11) **EP 1 240 037 B1**

(12) **EUROPÄISCHE PATENTSCHRIFT**

(45) Veröffentlichungstag und Bekanntmachung des Hinweises auf die Patenterteilung:
**17.03.2004 Patentblatt 2004/12**

(21) Anmeldenummer: **00985172.6**

(22) Anmeldetag: **15.12.2000**

(51) Int Cl.⁷: **B60C 23/06**

(86) Internationale Anmeldenummer:
**PCT/EP2000/012828**

(87) Internationale Veröffentlichungsnummer:
**WO 2001/044001 (21.06.2001 Gazette 2001/25)**

(54) **VERFAHREN UND VORRICHTUNG ZUR ERKENNUNG EINES DRUCKVERLUSTES VON REIFEN IN KRAFTFAHRZEUGEN**

METHOD AND DEVICE FOR DETECTING A DROP IN PRESSURE IN MOTOR VEHICLE TYRES

PROCEDE ET DISPOSITIF PERMETTANT DE DETECTER UNE PERTE DE PRESSION AFFECTANT DES PNEUS D'AUTOMOBILE

(84) Benannte Vertragsstaaten:
**DE FR GB IT**

(30) Priorität: **15.12.1999 DE 19960419**
**22.08.2000 DE 10041248**
**11.10.2000 DE 10050197**

(43) Veröffentlichungstag der Anmeldung:
**18.09.2002 Patentblatt 2002/38**

(73) Patentinhaber: **Continental Aktiengesellschaft**
**30165 Hannover (DE)**

(72) Erfinder:
• **LATARNIK, Michael**
**verstorben (DE)**
• **GRIESSER, Martin**
**65760 Eschborn (DE)**
• **KÖBE, Andreas**
**64625 Bensheim (DE)**
• **EDLING, Frank**
**65929 Frankfurt (DE)**

(56) Entgegenhaltungen:
**EP-A- 0 802 074**

**Beschreibung**

Die Erfindung betrifft ein Verfahren gemäß Oberbegriff von Anspruch 1 und eine Vorrichtung zur Bestimmung des Reifendrucks, gemäß Oberbegriff von Anspruch 12.

Kraftfahrzeuge, die mit einem elektronischen System zur Regelung der Fahrdynamik, wie beispielsweise ABS, ASR oder ESP ausgestattet sind, weisen üblicherweise eine Einrichtung zur Messung der Winkelgeschwindigkeit der Fahrzeugräder auf. Eine Messung der Winkelgeschwindigkeit der Fahrzeugräder kann insbesondere mit Hilfe von aktiven Raddrehzahlsensoren erfolgen. Es ist bereits bekannt, daß sich zur Reifendruckverlusterkennung die Beobachtung einer Änderung in der Winkelgeschwindigkeit der Räder eignet.

Die bekannten Systeme zur Erkennung eines Druckverlusts gehen praktisch immer davon aus, daß bei sich verringerndem Druck ein Ansteigen der Raddrehzahl bzw. ein Absinken des dynamischen Radradius resultiert.

Zur Erfassung der Raddrehzahlinformationen speichern einige Systeme die aktuelle Radgeschwindigkeit zunächst in einem Speicher ab und werten diese zu einem späteren Zeitpunkt aus. Gegenüber Systemen, die keine Speicherung der Daten vornehmen, kann vorteilhafterweise aus dem Verlauf der Radgeschwindigkeiten auf die aktuelle Fahrsituationen geschlossen werden, so daß, was für eine ausreichende Genauigkeit der Druckverlusterkennung nötig ist, den Reifendruckverlust überlagernde Schwankungen der Radwinkelgeschwindigkeiten aus den Daten entfernt werden können.

Praktisch allen bekannten Reifendruckerkennungssystemen ist gemeinsam, daß dem Erkennungssystem zunächst mitgeteilt werden muß, wann der gewünschte Nenndruck $P_0$ der montierten Räder eingestellt ist. Dieser Ausgangszustand für die Reifendruckerkennung kann dem elektronischen System beispielsweise mittels eines Reset-Schalters, der vom Fahrzeugnutzer gedrückt werden muß, mitgeteilt werden. Tritt nach einer bestimmten Zeit ein Druckverlust an einem oder mehreren Rädern auf, verringert sich der Reifendruck des betreffenden Rades um die Druckdifferenz ÄP. Als Folge des Druckverlustes ändert sich der dynamische Abrollradius des betreffenden Rades in einer vom Reifen abhängigen charakteristischen Weise. Wie bereits weiter oben erwähnt, wird üblicherweise bei bekannten Druckverlusterkennungssystemen dann auf einen Druckverlust erkannt, wenn sich der dynamische Abrollradius des betreffenden Rades um einen bestimmten Minimalwert verringert hat, wodurch sich die Raddrehzahl erhöht.

Es wurden bereits zahlreiche Verfahren zur Erkennung eines Druckverlustes durch Auswertung der Radgeschwindigkeit vorgeschlagen. Bekannte Verfahren zur Druckverlusterkennung auf Basis von Raddrehzahlinformationen beschäftigen sich häufig mit dem Problem, die Druckverlusterkennung noch zuverlässiger und genauer durchzuführen. Die Schwierigkeit, eine Druckverlusterkennung mit hoher Genauigkeit durchzuführen besteht darin, eine Änderung des dynamischen Abrollradius aufgrund eines Druckverlustes von Änderungen des dynamischen Abrollradius zu unterscheiden, die u. a. durch dynamische Fahrsituationen, insbesondere Kurvenfahrt, Beschleunigung, Verzögerung usw., und Fahrbahneffekte (Schlaglöcher, verschiedene Reibwerte) hervorgerufen werden können und in der Regel größer sind, als der Einfluß eines Druckverlustes auf den dynamischen Abrollradius (Störeffekte).

Eine Druckverlusterkennung mit hoher Erkennungsgenauigkeit auch bei dynamischen Fahrmanövern ist in der Deutschen Patentanmeldung 199 61 681 ein Verfahren vorgeschlagen worden. Hier werden zusätzliche physikalische Daten, wie beispielsweise Gierrate, Beschleunigung, Bremsenbetätigung, Motormoment usw. in den Erkennungsalgorithmus zur Druckverlusterkennung einbezogen, so daß eine Druckverlusterkennung auch während dynamischer Fahrmanöver (Kurvenfahrt, Beschleunigen, Abbremsen usw.) durchführbar ist.

In der DE 197 21 480 A1 ist ein in ein elektronisches Antiblockiersystem (ABS) integriertes Druckverlusterkennungsverfahren beschrieben, bei dem nach Auslösen des Reset-Schalters, wenn der Nenndruck der Räder eingestellt ist, zunächst eine zeitlich begrenzte Lernphase durchlaufen wird, in der ein Mikrocontroller unter Berücksichtigung der Fahrsituation Radwinkelgeschwindigkeiten verfolgt und aus dem zeitlichen Verlauf der aus den Radwinkelgeschwindigkeiten gebildeten Referenzwerte obere und untere Grenzwerte ($G_1$ und $G_2$) festlegt. Im Anschluß an die Lernphase beginnt eine Vergleichsphase, in der überprüft wird, ob die aktuell bestimmten Referenzwerte innerhalb des durch die gelernten Grenzwerte definierten Bereichs liegen.

Das Verfahren berücksichtigt die aktuelle Fahrsituation, indem während der Lernphase und während der Vergleichsphase Referenzwerte während ungeeigneter, dynamischer Fahrsituationen ausgeschlossen werden.

Bekannte Verfahren erkennen einen Druckverlust im Reifen demnach anhand eines Anstiegs der Winkelgeschwindigkeit bzw. eines Abfalls des dynamischen Abrollradius bei einem oder mehreren Rädern. Die Qualität der Erkennung ist allerdings vielfach nicht sicher genug, da das Kriterium zur Erkennung auf einer vergleichsweise geringen Änderungen der Raddrehzahl beruht und die Raddrehzahl durch eine Vielzahl unerwünschter Effekte um ein größeres Maß als der zu messende Effekt beeinflußt wird.

EP-A-802 074 zeigt ein Verfahren zur Erkennung eines Druckverlustes von Reifen mit den Merkmalen des Oberbegriffs des Anspruchs 1.

Aufgabe der vorliegende Erfindung ist es, ein Verfahren zur Erkennung eines Druckverlusts auf Basis von Raddrehzahlsignalen vorzuschlagen, welches gegenüber unerwünschten Effekten, wie beispielsweise Änderungen der Raddrehzahl aufgrund einer Kurvenfahrt, unempfindlicher ist, als bekannte Verfahren.

Diese Aufgabe wird erfindungsgemäß gelöst durch ein Verfahren gemäß Anspruch 1 und eine Vorrichtung gemäß Anspruch 12.

Die vorliegende Erfindung basiert auf dem Prinzip der Erkennung eines Druckverlusts anhand eines Abfalls der Winkelgeschwindigkeit bzw. eines Anstiegs des dynamischen Abrollradius bei einem oder mehreren'Rädern.

Die Druckmessung erfolgt in an sich bekannter Weise durch Auswertung von sensorisch bestimmten Winkelgeschwindigkeiten aller Räder des Kraftfahrzeugs oder Auswertung von Informationen, die die Winkelgeschwindigkeiten auf Basis von Zeitintervallen angeben.

Bei dem Erkennungsverfahren gemäß der Erfindung wird der überraschende Effekt ausgenutzt, daß wenn ein Reifen soviel Druck verloren hat, daß der Reifen im wesentlichen auf der Notlauffläche abrollt, dieser einen Anstieg des dynamischen Abrollradius, also ein detektierbare Absinken der Radgeschwindigkeit zeigt.

Vorzugsweise besitzt das Rad eine innerhalb des Reifenmantels angeordnete Notlauffläche, insbesondere handelt es sich um ein Runflat-Rad mit einer auf der Felge angeordneten Notlauffläche.

Erfindungsgemäß bevorzugt kann die Erkennung des Anstiegs des dynamischen Abrollradius eines Rades entweder dadurch erfolgen, daß

V1) überprüft wird, ob ein fest vorgegebener oder eingelernter Sollwert durch den gemessenen dynamischen Abrollradius überschritten wird oder
V2) überprüft wird, ob der dynamische Abrollradius ansteigt, nachdem dieser zuvor abgefallen ist.

Das Verfahren V2), welches ganz besonders bevorzugt ist, kann auch ein mit den weiter unten beschriebenen Verfahren Prog A und Prog B kombiniertes Verfahren sein. Beispielsweise läßt sich ein zunächst schwaches Absinken des dynamischen Abrollradius als Folge eines Druckverlusts vor dem Aufsetzen des Reifenmantels auf den Notlaufkörper (Zeitpunkt des Beginns des Pannenlaufs) zunächst mit den Verfahren Prog A und Prog B feststellen. Steigt danach der dynamische Abrollradius stark an, so liegt Pannenlauf vor.

In einer weiteren bevorzugten Ausführungsform wird verfahrensgemäß auf einen Reifendruckverlust ausschließlich erkannt, indem überprüft wird, ob die Winkelgeschwindigkeit bzw. der dynamische Abrollradius des betrachteten Rades um mehr als einen vorgegebenen Schwellenwert angestiegen ist.

Erfindungsgemäß kommen als geeignete Räder für das Kraftfahrzeug beispielsweise herkömmliche Reifen mit Standardfelge oder bevorzugt Reifen mit Notlaufeigenschaften, insbesondere Runflat-Räder mit Notlauffläche oder Runflat-Reifen mit für den Notlauf verstärkter Seitenwand, zum Einsatz. Besonders bevorzugt werden Runflat-Räder mit einer Notlauffläche, die auf der Felge angeordnet ist, eingesetzt.

Zur Erzeugung eines Geschwindigkeitsmusters kann die Notlauffläche in einem Runflat-Rad oder -Reifen in der Weise modifiziert sein, daß während der Drehung des Reifens im Pannenlauf während der Fahrt ein definiertes Geschwindigkeitsmuster erzeugt wird.

Ein Runflat-Rad, welches bevorzugt gemäß dem Verfahren der vorliegenden Erfindung einsetzbar ist, wird in der DE 199 08 701.6 beschrieben. Die Notlauffläche gerät bei dem beschriebenen Reifentyp dann mit der Innenseite des Reifens in Kontakt, wenn der Reifendruck nicht mehr ausreicht, die auf den Reifen einwirkende Last zu tragen.

Die vorliegende Erfindung betrifft in einer bevorzugten Ausführungsform auch ein Verfahren zur Erkennung eines Druckverlusts von Reifen in einem Kraftfahrzeug während der Fahrt, welches zur Bestimmung eines vergleichsweise geringfügigen Abfall des Reifendrucks unterhalb eines definierbaren Schwellenwertes (kritischer Reifendruck) geeignet ist, welches parallel bzw. quasiparallel zu dem zuvor beschriebenen Verfahren ausgeführt wird. Dieses weitere Verfahren basiert auf einer an sich bekannten Erkennung eines Druckverlusts auf Basis einer Erhöhung der Radgeschwindigkeit.

Vorzugsweise sind daher weitere Teilverfahren vorgesehen, die jeweils für sich ein getrennt funktionsfähiges Verfahren zum Messen des Drucks in einem Fahrzeugreifen bzw. zum Erkennen eines kritischen Reifendrucks darstellen.

Die Schritte des oder der weiteren Teilverfahren werden erfindungsgemäß parallel bzw. quasiparallel ausgeführt.

Die parallel bearbeiteten Teilverfahren können durch einen Mikrorechner abgearbeitete Computerprogramme sein.

Handelt es sich bei den Teilverfahren beispielsweise um Unterprogramme, so können diese Unterprogramme in eine Hauptschleife eines Betriebsprogramms so eingearbeitet sein, so daß sie während der Abarbeitung der Hauptschleife nacheinander aufgerufen werden. Es ist auch möglich, daß die Arbeitszeit eines Mikrorechner, die den Teilverfahren zur Verfügung gestellt wird, zwischen den einzelnen Programmteilen oder nach einem Zeitschema "Interruptgesteuert" aufgeteilt wird. Unter einer quasiparallelen Bearbeitung wird gemäß der Erfindung verstanden, wenn eine der vorstehend beschriebenen Verfahrensweisen vorliegt.

Alle Teilverfahren sind bevorzugt so gestaltet, daß sie nach Erkennung eines Druckverlusts ein Signal beispielsweise über eine Leitung oder aber über ein Datenregister abgeben, welches die Information "Druckverlust" enthält. Selbstverständlich können dabei auch noch zusätzliche Signale, die eine Information zur Identifikation des Teilverfahrens beinhalten, über diese Leitung oder über ein weiteres Datenregister mitübertragen werden.

In einer bevorzugten Ausführungsform der Erfindung werden parallel bzw. quasiparallel ein erstes weiteres und ein zweites weiteres Teilverfahren ausgeführt.

Die Teilverfahren erzeugen vorzugsweise aus den Winkelgeschwindigkeiten oder aus Informationen, die die Winkelgeschwindigkeiten auf Basis von Zeitintervallen angeben, eine oder mehrere Referenzgrößen. Die Werte der Referenzgröße werden zweckmäßigerweise daraufhin überprüft, ob obere und untere Grenzwerte $G_1$, $G_2$ überschritten werden, wobei das zweite Teilverfahren insbesondere Grenzwerte $^BG_1$, $^BG_2$ besitzt, die einen engeren Bereich definieren, als die Grenzwerte $^AG_1$, $^AG_2$ des ersten Teilverfahrens, so daß $^BG_1 < ^AG_1$ und $^BG_2 > ^AG_2$ ist.

Vorzugsweise werden die Schwellenwerte $^AG_1$ und $^AG_2$ im ersten weiteren Teilverfahren so gewählt, daß eine Warnung über einen Druckverlust bei einem Restdruck von etwa 1,0 bis 1,4 bar ausgegeben wird. Die Schwellenwerte $^BG_1$ und $^BG_2$ im zweiten weiteren Teilverfahren werden bevorzugt so gewählt, daß eine Warnung auf Druckverlust bereits bei einem Restdruck von etwa 1,5 bis 2,0 bar erfolgt.

Das erste weitere Teilverfahren spricht vorzugsweise nur bei einem vergleichsweise hohen Druckverlust an. Dieses Teilverfahren ist daher für Fahrmanöver vorgesehen, die eine hohe Dynamik aufweisen. Der Begriff "dynamisches Fahrmanöver" wird im nachfolgenden Absatz beschrieben. Das zweite Teilverfahren spricht bevorzugt bereits bei einem geringen Druckverlust an und ist aufgrund der höheren Empfindlichkeit nur während Fahrmanövern mit geringerer Dynamik einsetzbar. Das zweite Teilverfahren ist so ausgelegt, daß die Weitermeldung der Information "Druckverlust" bei engen Kurven bzw. starker Beschleunigung unterdrückt wird. Das erste Teilverfahren eignet sich dagegen zur Druckverlusterkennung bereits bei unruhigeren (dynamischen) Fahrmanövern.

Unter dem Begriff "dynamisches Fahrmanöver" wird im Sinne der Erfindung ein Fahrmanöver verstanden, bei dem nur bis zu einem gewissen Mindestmaß ein Einfluß der Fahrbedingung auf den dynamischen Abrollumfang bzw. den dynamischen Abrollradius stattfindet. Dies ist im allgemeinen dann der Fall, wenn auf das Fahrzeug geringe Beschleunigungskräfte, wie Querbeschleunigung Q, Längsbeschleunigung L oder Gierrate 0, wirken.

Unter dem Begriff "wenig dynamisches Fahrmanöver" wird im Sinne der Erfindung verstanden, wenn kein dynamisches Fahrmanöver, wie oben beschrieben, vorliegt. Dies ist vorzugsweise dann der Fall, wenn Q kleiner oder gleich etwa 0,3 g, L kleiner oder gleich etwa 0,3 g und 0 kleiner oder gleich etwa 7 °/s ist. Liegt mindestens eine der aufgeführten Größen oberhalb der vorstehend angegebenen Grenzwerte, so liegt bevorzugt ein dynamisches Fahrmanöver vor.

Die beiden weiteren Teilverfahren unterscheiden sich besonders bevorzugt dadurch, daß das zweite Teilverfahren einen engeren Grenzwertbereich besitzt, als das erste Teilverfahren. Enthalten die Teilverfahren Schritte zur Abfrage bzw. Überwachung von Beschleunigungsdaten, so wird im allgemeinen die Lernphase und/oder die Vergleichsphase bei Überschreiten der Beschleunigungswerte von festgelegten Schwellenwerten abgebrochen, so daß die beiden jeweiligen im Verfahrensdurchlauf aufgenommenen Referenzwerte nicht berücksichtigt werden.

Ganz besonders bevorzugt unterscheidet sich das erste Teilverfahren von dem zweiten Teilverfahren zusätzlich dadurch, daß bei dem ersten Teilverfahren eine Berücksichtigung der bestimmten Referenzwerte nur bei wenig dynamischen Fahrsituationen erfolgt, wogegen eine Berücksichtigung der Referenzwerte bei dem zweiten Teilverfahren auch während dynamischer Fahrmanöver erfolgt. Das heißt, daß während wenig dynamischer Fahrmanöver beide Teilverfahrens gleichzeitig aktiv sind und während dynamischer Fahrmanöver nur das zweite Teilverfahren.

Vorzugsweise wird das zweite Teilverfahren nur so lange ausgeführt, bis mindestens ein Beschleunigungswert umfassend die Längsbeschleunigung und Querbeschleunigung einen Wert aufweist, der kleiner oder gleich 0,15 g ist, wobei g für die Erdbeschleunigung steht bzw. die Gierrate einen Wert von kleiner oder gleich etwa 3 °/s aufweist. Das Ausblenden bzw. das Abschalten eines Teilverfahrens kann entweder dadurch erfolgen, daß der Algorithmus für das Teilverfahren durch das Hauptprogramm in Abhängigkeit von der Fahrsituationen aufgerufen wird oder in einem Teilverfahren selbst eine Überprüfung der Fahrbedingungen vorgenommen wird.

Neben den zuvor beschriebenen Verfahren zur Druckbestimmung kann bevorzugt ein drittes weiteres geschwindigkeitsabhängigen Teilverfahrens, welches ein Geschwindigkeitsmuster des Raddrehzahlverlaufs erkennt, durchgeführt werden. Das geschwindigkeitsabhängige Teilverfahren erkennt das Geschwindigkeitsmuster, welches durch eine speziell beschaffene Notlauffläche erzeugt wird.

Die vorstehend erwähnte, speziell beschaffene Notlauffläche eines Runflat-Rades, weist auf der Oberfläche vorzugsweise Kavitäten auf, welche während des Abrollens der Notlauffläche auf einer Fahrbahn eine für den Notlaufzustand charakteristische Schwingung erzeugen. Diese Schwingung ist anhand des Geschwindigkeitsverlaufs des Rades erkennbar und somit mittels Raddrehzahlsensoren meßbar.

Erfindungsgemäß bevorzugt ist ein erstes weiteres Teilverfahren (Prog A) mit einem Ansprechen bei hohem Druckverlust, ein zweites weiteres Teilverfahren (Prog B) mit einem Ansprechen bei geringerem Druckverlust und ein drittes weiteres parallel bzw. quasiparallel ausgeführtes Teilverfahren (Prog S) vorgesehen, welches anspricht, wenn bei einem Fahrzeugreifen mit einer speziell beschaffenen Notlauffläche ein Geschwindigkeitsmuster erkannt wird, welches charakteristisch für einen Reifendruckverlust ist.

Mittels des erfindungsgemäßen Verfahrens kann sicher erkannt werden, zu welchem Zeitpunkt ein Kontakt zwischen Notlauffläche und Reifenmantel (Pannenlauf) eingetreten ist. Eine Warnmeldung, die auf dem erfindungsgemäß berücksichtigtem Effekt des Anstiegs des dynamischen Abrollradius beruht, ist vergleichsweise sicher und zuverlässig, da es sich nicht um eine Relativmessung, wie bei herkömmlichen Druckverlusterkennungsverfahren handelt. Es ist daher möglich, zusätzliche Signale oder Instruktionen ausgehend von dem Ereignis des Pannenlaufs zu generieren. So kann beispielsweise eine Restlaufstrecke für den Reifen im Pannenlauf angezeigt werden. Vorzugsweise werden daher gemäß der Erfindung Restlaufstrekken für die Reifen im Pannenlauf angezeigt. Die Restlaufstrecken können insbesondere abhängig vom Reifentyp sein.

Vorzugsweise wird das Verfahren gemäß der Erfindung zum Messen des Drucks von Fahrzeugreifen innerhalb eines Verfahrens zur Regelung der Bremskraft und/oder der Fahrdynamik (ABS, ASR, ESP) ausgeführt.

Die Ausgänge der Teilverfahren, die eine Informationen über einen Druckverlust enthalten, sind vorzugsweise zu einem gemeinsamen Ausgang ODER-verknüpft. Dieser Ausgang kann beispielsweise mit einer Warnlampe im Armaturenbrett verbunden sein.

Da das erfindungsgemäße Verfahren lediglich Einrichtungen benötigt, die ohnehin in einem üblicherweise eingesetzten ABS, ASR oder ESP System vorhanden sind, läßt sich dieses auf vorteilhafte Weise in ein solches System kostengünstig integrieren.

Die Erfindung betrifft daher auch eine Vorrichtung zum Steuern der Bremskraft und/oder der Fahrdynamik und zum Messen des Drucks von Fahrzeugreifen, welche dadurch gekennzeichnet ist, daß ein Mikrorechner, der mit Raddrehzahlsensoren und gegebenenfalls zusätzliche Fahrdynamiksensoren verbunden ist, ein vorstehend beschriebenes erfindungsgemäßes Verfahren und ein an sich bekanntes Verfahren zur Regelung der Bremskraft und/oder Fahrdynamik bearbeitet.

Nachfolgend wird das erfindungsgemäße Verfahren anhand eines Ausführungsbeispiels und den Figuren näher erläutert.

Es zeigen

Fig. 1 eine schematische Darstellung eines Verfahrens zur Druckverlusterkennung mit mehreren Teilverfahren,

Fig. 2a ein Diagramm mit den zeitlichen Verlauf eines aus dem Radsignalen gebildeten Referenzwertes,

Fig. 2b ein weiteres Diagramm mit einem zeitlichen Verlauf eines aus dem Radsignalen gebildeten Referenzwertes zuzüglich eingezeichneter Grenzwerte zur Druckbestimmung nach der an sich bekannten Methode,

Fig. 3 ein Diagramm mit dem Verlauf des dynamischen Radradius $r_d$ in Abhängigkeit vom Reifendruck P und

Fig. 4 die schematische Darstellung eines Schnittbilds eines Runflat-Rads mit Notlauffläche auf der Felge.

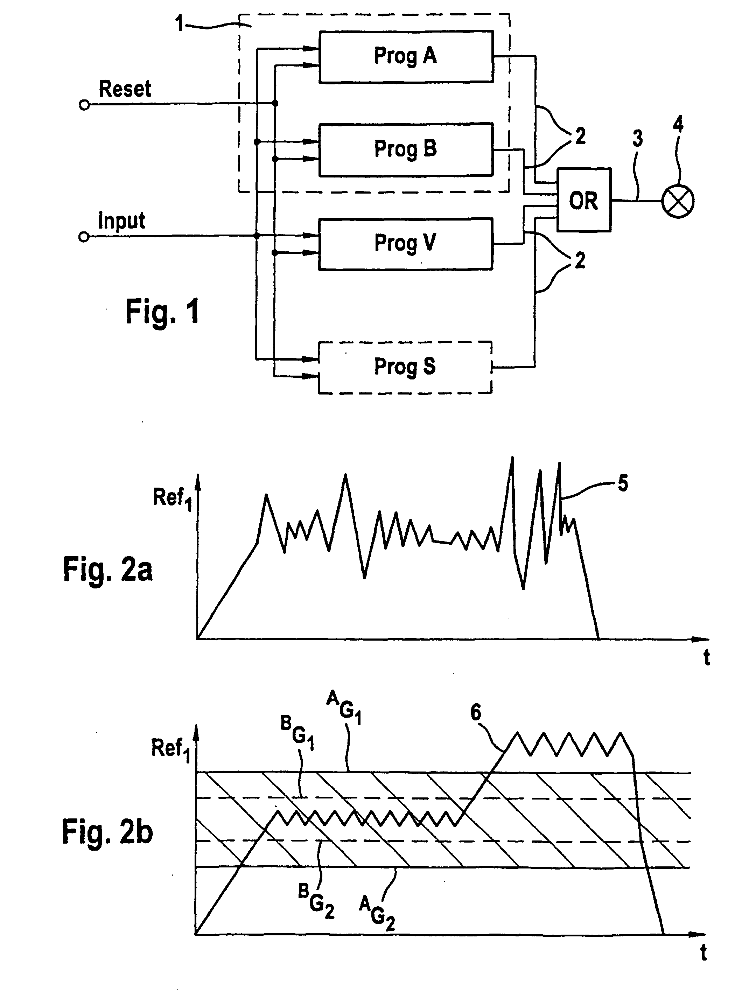

In Fig. 1 ist ein Beispiel für ein bevorzugtes Verfahren gemäß der Erfindung mit drei bzw. vier quasiparallel ausgeführten Teilverfahren Prog A, Prog B, Prog V bzw. Prog S dargestellt. Die vorliegende Erfindung bezieht sich insbesondere auf das Teilverfahren Prog V.

Durch einen Anschluß Reset können die Teilverfahren in Fig. 1 in einen Ausgangszustand zurückgesetzt werden. Leitung Input symbolisiert den Anschluß für die Signale der vier Raddrehzahlsensoren des Kraftfahrzeuges. Die Teilverfahrens besitzen Ausgänge 2, die durch eine Verknüpfungselement OR zu einem gemeinsamen Ausgangssignal 3 zusammengefaßt sind. Bei dem Verknüpfungselement OR handelt es sich um eine ODER-Verknüpfung. Der Ausgang 3 kann mit einer Warnlampe 4 verbunden sein.

Die in Fig. 1 dargestellte Einheit 1 umfaßt die Teilverfahren Prog A und Prog B. Mit Einheit 1 läßt sich dem zugrundeliegenden Prinzip nach an sich bekannte Druckverlusterkennung praktisch bei allen Reifentypen (Standardreifen, Runflat-Räder) durchführen. Die Teilverfahren Prog V, Prog S sind insbesondere für Spezialreifen, wie Reifen mit einer Erzeugungseinrichtung für ein Geschwindigkeitsmuster oder Reifen mit einer Notlauffläche geeignet.

Teilverfahren Prog V dient zur Erkennung eines Geschwindigkeitsmusters im Raddrehzahlverlauf. Teilverfahren Prog S dient zur Erkennung eines Anstiegs des dynamischen Radradius. Beide letztgenannte Teilverfahren stellen wie die Teilverfahrens Prog A und Prog B für sich getrennt funktionsfähige Verfahren zur Erkennung eines Druckverlusts von Reifen in einem Kraftfahrzeug dar. Die Teilverfahren Prog S und Prog V sind gegenüber dynamischen Fahrsituationen vergleichsweise unempfindlicher.

Wie weiter unten noch im einzelnen beschrieben wird, kann, wie in Fig. 2b dargestellt, das Teilverfahren Prog A so gestaltet sein, daß grobe Schwellen durch Werte $^AG_1$ und $^AG_2$ während der Lernphase festgelegt werden, so daß ein Abschluß der Lernphase vergleichsweise schnell nach dem Rücksetzen durch Drükken der Reset-Taste beim Auffüllen der Reifen auf den Ausgangs-Nenndruck erfolgen kann. Auch wenn nach dem Auffüllen der Reifen ausschließlich so gefahren wird, daß das Fahrzeug sich für eine lange Zeit in dynamischen Fahrzuständen befindet, kann das Lernverfahren bereits nach einer Zeit von vorzugsweise weniger als etwa eine Minute beendet werden.

Beschreibung der Verfahrensschritte von Prog V (Verfahren gemäß der Erfindung):

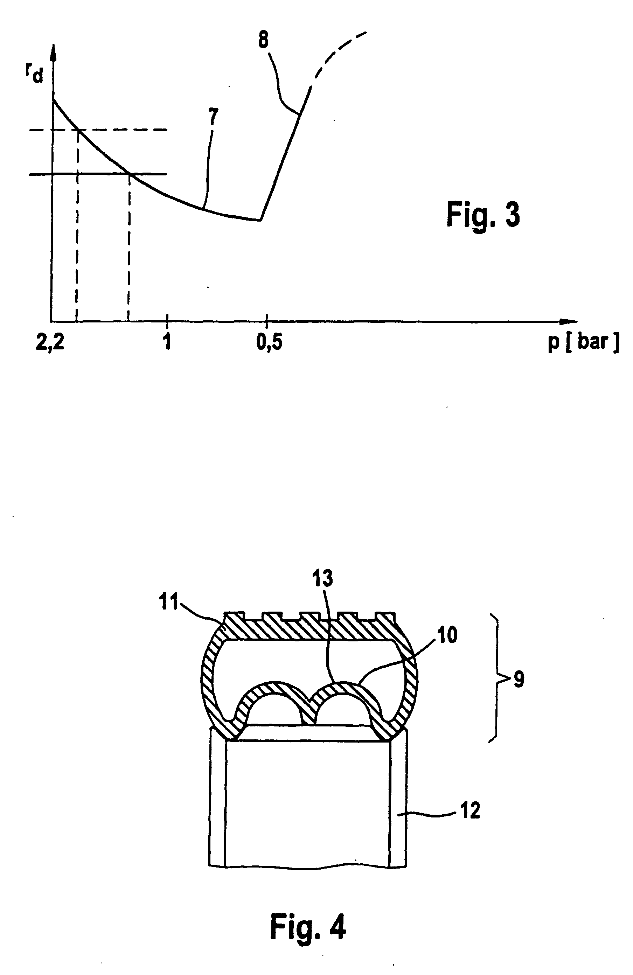

Die Arbeitsweise von Prog V wird anhand der Figuren 3 und 4 näher erläutert. Sind auf dem Kraftfahrzeug Runflat-Räder 9 montiert, so sinkt in Abhängigkeit vom Reifendruck der dynamische Abrollradius $r_d$ zunächst wie bei einem gewöhnlichen Reifen ab (Bezugszeichen 7). Ist der Druckverlust so hoch, daß die in einem Runflat-Rad vorhandene Notlauffläche 10 den Mantel 11 des Reifens berührt, so steigt der dynamische Abrollradius stark an (Bezugszeichen 8).

Das Verfahren Prog V führt eine Überprüfung auf ein Absinken der Umlaufgeschwindigkeit der Räder durch, welches eine Folge des Anstiegs des dynamischen Abrollradius $r_d$ ist.

Die Methode zur Erkennung mittels Geschwindigkeitsänderungen der Räder in Verfahren Prog V kann bei bestimmten Reifentypen erheblich unempfindlicher sein, als bei den weiter unten im Detail beschriebenen Verfahren Prog A und Prog B. Bei diesem Verfahren ist es bereits ausreichend, die einzelnen Radgeschwindigkeiten beziehungsweise reziproken Radgeschwindigkeiten (Zeitwerte) direkt auf das Überschreiten (Unterschreiten) von fest vorgegebenen Grenzwerten, die vom eingesetzten Reifentyp abhängig sind, zu überwachen. Zweckmäßigerweise müssen diese Grenzwerte nicht in einem Lernverfahren, wie weiter unten beschrieben, im System eingelernt werden sondern es ist möglich, fest abgelegte reifentypabhängige Grenzwerte in einer Datenbank zu speichern.

Beschreibung der Verfahrensschritte von Prog A (erstes weiteres Teilverfahren):

Schritt A1:

Aufnehmen der Winkelgeschwindigkeiten mittels Radsensoren der Räder $w_1$, $w_2$, $w_3$ und $w_4$, wobei mit $w_1$ das rechte Vorderrad, mit $w_2$ das linke Vorderrad, mit $w_3$ das rechte Hinterrad und mit $w_4$ das linke Hinterrad bezeichnet ist. Statt einem Wert für die Winkelgeschwindigkeit w kann auch bevorzugt eine zeitliche Größe T als Maß für die Radgeschwindigkeit verwendet werden, insbesondere kann eine Synchronisation auf eine Sensorflanke erfolgen. Dies bietet den Vorteil einer erhöhten Genauigkeit bei der Bestimmung der Radgeschwindigkeiten.

Schritt A2:

Ermitteln von Vergleichswerten (Lernphase) durch die Schritte A2a bis A2g.

Schritt A2a:

Bildung von Referenzwerten nach der Formel

$$Ref_i = (w_k + w_l) / (w_m + w_n)$$

aus aktuellen Werten von w (bzw. bevorzugt einer Zeit T), die nach dem Verfahren unter Punkt 1 bestimmt wurden, wobei i = 1...3 und die $w_i$ bei jedem Referenzwert unterschiedliche Räder bezeichnen.
In den Figuren 2a und 2b ist ein Beispiel für einen Verlauf von $Ref_1 = (w_k + w_l)/(w_m + w_n)$ in Abhängigkeit von der Zeit t dargestellt, wobei k = vorne links, l = hinten rechts, m = vorne rechts und n = hinten links sind. Der Verlauf von Kurve 5 oder 6 gibt Aufschluß über Abweichungen des dynamischen Abrollradius bei einem Druckverlust. Würden alle Räder bei Idealbedingungen die gleiche Winkelgeschwindigkeit haben, so betrüge der Wert des Referenzwertes $Ref_1 = 1$. Bei einem Druckverlust weicht der Referenzwert um einen bestimmten Betrag vom Wert 1 ab. Der Verlauf von $Ref_1$ ist allerdings um einen wesentlich größeren Betrag von den aktuellen Fahrbedingungen, wie beispielsweise Fahrbahnbeschaffenheit, Beschleunigung oder Kurvenfahrt abhängig.

Schritt A2b:

Prüfung, ob die Fahrbedingungen bzw. die Fahrsituation in einem zulässigen Bereich liegt. Wenn eine Fahrbedingung vorliegt, die ein Bilden der Referenzwerte als nicht sinnvoll erscheinen läßt, beispielsweise wenn die Längsbeschleunigung, die Querbeschleunigung oder die Radbeschleunigung bestimmte Schwellenwerte überschreitet, so wird das Teilverfahren nicht weitergeführt.

Schritt A2c:

Erzeugung von gefilterten Referenzwerten $\overline{Ref}_i$ z. B. mittels eines Tiefpassfilters 1. Ordnung. Die Tiefpassfilterung läßt sich entweder durch Auswertung von gespeicherten Daten von Referenzwerten durchführen oder mittels eines Rekursionsverfahrens zur Tiefpassfilterung.

Schritt A2d:

Speichern von Ober- und Untergrenzen der gefilterten und ungefilterten Referenzwerte $_iRef^{Max}$ und $_iRef^{Min}$ und Erzeugung eines Mittelwertes $Ref^M$ aus den zurückliegenden Daten bzw. rekursive Erzeugung eines Mittelwertes.

Schritt A2e:

Wiederholen der Schritte A1 bis A2d. solange, bis die Anzahl der ermittelten Referenzwerten einen Wert N (N>1, vorzugsweise N>5) erreicht hat und Überprüfung, ob die Differenz von $_iRef^{Max}$ und $_iRef^{Min}$ einen bestimmten Schwellenwert nicht überschreitet. Ist dieser Schwellenwert überschritten, so wird das Teilverfahren neu begonnen.

Schritt A2f:

Speichern von oberen und unteren Grenzwerten $_iG_1$, $_iG_2$ in Abhängigkeit von den im zurückliegenden Zeitraum ermittelten Referenzwerten (Lernphase) wobei bevorzugt zur Bildung der Grenzwerte ein Offsetwert zum Mittelwert $Ref^M$ hinzuaddiert bzw. subtrahiert wird.

Schritt A2g: Fortsetzung der Programmausführung im Programmteil "Vergleichsphase", welcher unter Punkt 3 beschrieben ist.

Beschreibung der Verfahrensschritte von Prog B (zweites weiteres Teilverfahren) :

Gegenüber dem unter Punkt 2 beschriebenen Verfahren sind die Verfahrensschritte von Prog A in Prog B auf nachfolgend beschriebene Weise abgewandelt. Daß hier beschriebene Verfahren entspricht weitgehend dem in der DE 197 21 480 A1 bei der Beschreibung von Fig. 2 angegebenen Verfahren, bei dem ein aktuelles Sample mit einem zu einem früheren Zeitpunkt gespeicherten Sample verglichen wird. Das Verfahren Prog B, welches gegenüber Prog A einen erheblich höheren Zeitbedarf hat, kann dann zu einer erfolgreichen Ermittlung von Vergleichswerten führen, wenn das Verfahren gegenüber Prog A unter Punkt 2 zur Ermittlung von Vergleichswerten aufgrund einer dynamischen Fahrsituation nicht geeignet ist.

Schritt B1 :

Aufnahme der Raddrehzahlsignale der einzelnen Räder. Hierbei kann überprüft werden, ob keine Fahrbedingung vorliegt, die ein Bilden der Referenzwerte als nicht sinnvoll erscheinen läßt. Wenn erkannt wurde, daß eine solche Fahrbedingung vorliegt, wird der aktuelle Durchlauf des Verfahrens beendet. Ansonsten erfolgten Übergang zu Schritt B2.

Schritt B2:

Aus den gemessenen Raddrehzahlen wird wenigstens wie weiter oben beschrieben mindestens ein Referenzwert der Referenzwerte $Ref_1$,$Ref_2$,$Ref_3$ gebildet. Auch hier kann, ebenfalls wie weiter oben beschrieben ist, eine Bildung der Referenzwert entweder über Zeitsignale T oder durch Verwendung von Radgeschwindigkeiten erfolgen.

Schritt B3:

Erzeugung eines zusätzlichen Datensatzes aus den ermittelten Referenzwerten durch Tiefpassfilterung. Auch hier kann die Tiefpassfilterung ein rekursives Verfahren sein, welches an einem aktuellen Zeitpunkt nur den zuletzt gefilterte Wert speichert.

Schritt B4:

Überprüfung, ob der aktuell ermittelte gefilterte Referenzwert größer ist, als der bisher ermittelte Maximalwert der ungefilterten Referenzwerte und gegebenenfalls Speicherung des neuen Maximalwertes. Auf analoge Weise wird auch der momentan gültige Minimalwert bestimmt. Zusätzlich kann es zweckmäßig sein, auch aus dem ungefilterten Referenzwerten fortlaufend einen Mittelwert, sowie die dazugehörende Standardabweichung zu ermitteln.

Schritt B5:

Überprüfung, ob bereits eine weitere vorgegebene Zahl N von Referenzwerten ermittelt wurde, d. h. ob ein vollständiges Sample von Referenzwerten aufgenommen wurde.
Ist dies nicht der Fall, wird der aktuelle Durchlauf des Verfahrens beendet. Andernfalls wird das Verfahren fortgesetzt.

Schritt B6:

Überprüfung, ob der Maximalwert der gefilterte Referenzwerte des aktuell aufgenommenen Samples um nicht mehr als einen vorgegebenen Betrag vom Maximalwert der gefilterten Referenzwerte des zuletzt gespeicherten Sample abweicht. Weiterhin wird in diesem Schritt überprüft, ob der Minimalwert der geschilderten Referenzwerten des aktuellen aufgenommenen Sample um nicht mehr als einen vorgegebenen Betrag von dem Minimalwert der geschilderten Referenzwerten des zuletzt gespeicherten Sample abweicht. Ansonsten wird das Verfahren wiederholt, bis die Bedingung erfüllt ist.

Schritt B7:

Ggf. Überprüfung, ob der Mittelwert der ungefilterten Referenzwerte des aktuellen Samples um nicht mehr als einen bestimmten Betrag vom Mittelwert der ungefilterten Referenzwerte des zuletzt gespeicherten Samples abweicht. Weiterhin erfolgt, wenn es zweckmäßig ist, eine Überprüfung dahingehend, ob der Mittelwert der ungefilterten Referenzwerte des aktuellen Samples zuzüglich sowie abzüglich eines Mehrfachen des Gütemaßes innerhalb der durch den oberen Grenzwert und den unteren Grenzwert gegebenen Schranken liegt. Dieses Mehrfache kann dabei beispielsweise das Vierfache betragen. Ansonsten wird das Verfahren beendet.

Schritt B8:

Festlegung eines oberen Grenzwerts, indem zum Maximalwert der gefilterten Referenzwerte des aktuellen Samples ein Offsetwert addiert wird. Ein unterer Grenzwert wird festgelegt, indem vom Minimalwert der gefilterten Referenzwerte des aktuellen Samples ein Offsetwert subtrahiert wird.

Ergab eine der Überprüfungen, daß die Abweichungen der Werte bei dem aktuellen Samples zu groß waren, erfolgt ein Übergang zu Schritt B6, indem die entsprechenden Werte des aktuellen Samples (Mittelwert, Standardabweichung der ungefilterten Referenzwerte, Maximalwert und Minimalwert der gefilterten Referenzwerte des aktuellen Samples) zum Vergleich mit künftig aufgenommenen Samples abgespeichert werden.

3. Vergleichsphase

Ermitteln von Referenzwerten gemäß Punkt 2a oder B2 und Berechnung nach einer der Formeln

$$\text{(Formel A)} \qquad {}_iG_1 < {}_i\text{Ref} < {}_iG_2$$

oder

$$\text{(Formel B)} \qquad {}_iG_1 < {}_i\text{Ref}^{\text{Filt}} < {}_iG_2,$$

wobei ${}_i\text{Ref}^{\text{Filt}}$ auf an sich bekannte Weise gefilterte Referenzwerte sein können. Durch Berechnung nach einer der Formeln A oder B kann nach dem erfindungsgemäßen Verfahren überprüft werden, ob ein Druckverlust aufgetreten ist. Liegt ein Druckverlust vor, wird zweckmäßigerweise eine Information über den Druckverlust des Rades ausgegeben. Werden mehrere Referenzwerte gebildet, kann zweckmäßigerweise durch Betrachtung der Referenzwerte dasjenige Rad individuell identifiziert werden, welches den Druckverlust aufweist.

Beschreibung der Verfahrensschritte von Prog S (drittes weiteres Teilverfahren) :

Das Verfahren Prog S dient zur Erkennung eines Geschwindigkeitsmusters eines zur Erzeugung eines Geschwindigkeitsmusters geeigneten Spezial-Rades/Reifens. Ein erfindungsgemäße einsetzbares Verfahren ist in der Eingangs erwähnten Druckschrift DE 199 08 701.6 beschrieben. Das Rad kann mit einer Notlauffläche ausgerüstet sein, die zur Erzeugung des Geschwindigkeitsmusters modifiziert ist.
Auch bei diesem Verfahren werden die Raddrehzahlsignale der Räder durch das ABS-System detektiert und an die zentrale Recheneinheit weitergeleitet. Die für den Notlaufzustand charakteristische und zur Raddrehzahl proportionale periodische Schwingung wird von einem auf der Felge 12 abgestürzten Notlaufkörper 10 erzeugt. Der Notlaufkörper besitzt an seiner Notlauffläche 13 eine Vielzahl von Einbuchtungen, die gleichmäßig oder ungleichmäßig über den Umfang verteilt sind.

Gemäß dem Verfahren werden zunächst die Radgeschwindigkeiten innerhalb definierter Zählzeiten aufgenommen. Mit Hilfe der Einbuchtungen werden für den Notlaufzustand charakteristische separat definierter und zur Raddrehzahl proportionalen periodische Schwingung n-ter Ordnung der Reifenperiode (zum Beispiel n = 13) erzeugt. Werden diese Schwingungen auf den Mittelwert der Raddrehzahl bezogen, so lassen sich Nulldurchgangszeiten des Drehzahl-Ausgangssignales angeben. Bei einem herkömmlichen Reifen sind die Abstände der Nulldurchgangszeiten im wesentlichen Konstant, wogegen bei dem hier eingesetzten Spezial-Reifen sich deutlich merkbare periodische Abweichungen von etwa 0,02 Millisekunden ergeben.

Nach dem in diesem Beispiel angegebenen Verfahren wird der Datensatz aus den Nulldurchgangszeiten in Abhängigkeit von der Zeit durch numerische Fourier-Transformation (FFT) analysiert. Hierdurch wird eine spektrale Leistungsdichte, aufgetragen über die Frequenz, erhalten.

Anhand der nach der Transformation erhaltenen Daten-Kurve mit der spektralen Leistungsdichte über der Frequenz lassen sich zuverlässig Spitzen ermitteln, die durch die Geschwindigkeitsvariation des Spezial-Reifens hervorgerufen sind. Zur Auswertung der Signale werden dann bestimmte vorgegebene Frequenzbereiche des transformierten Signals aufintegriert. Im Anschluß daran werden die ermittelten Integralwerte mit Referenz- und/oder Schwellenwerten verglichen und bei Überschreitung einer vorgegebenen Differenz zu den Referenz- und/oder Schwellenwerten ein Warnsignal an eine im Blickfeld des Fahrers angeordnete Warneinrichtung ausgegeben.

Der Schwellenwert, welcher beim Verfahren Prog V zum Einsatz kommt, muß derart groß gewählt werden, daß ein Anstieg der Radgeschwindigkeiten durch Störeinflüsse, wie beispielsweise durch Sonneneinstrahlung auf einen Reifen, sicher ausgeschlossen werden. Geeignete Werte ermittelt der Fachmann durch Fahrversuche. Die Werte hängen empfindlich vom Reifenund Fahrzeugtyp ab.

## Patentansprüche

1. Verfahren zur Erkennung eines Druckverlustes von Reifen in einem Kraftfahrzeug während der Fahrt, insbesondere zum Detektieren des Aufsitzens des Reifenmantels auf eine im Reifen vorhandene Notlauffläche oder des Absinkens des Reifendrucks unterhalb eines Schwellenwertes (kritischer Reifendruck), durch Auswertung von sensorisch bestimmten Winkelgeschwindigkeiten der Räder des Kraftfahrzeugs oder Auswertung von Informationen, die die Winkelgeschwindigkeiten auf Basis von Zeitintervallen angeben, **dadurch gekennzeichnet, daß** das Verfahren zur Druckverlusterkennung darauf basiert, einen hohen Druckverlust oder einen Totaldruckverlust anhand einer Verringerung der Winkelgeschwindigkeit bzw. einer Erhöhung des dynamischen Abrollradius $r_d$ bei einem oder mehreren Rädern zu erkennen.

2. Verfahren nach Anspruch 1, **dadurch gekennzeichnet, daß** auf einen Druckverlust erkannt wird, V1) wenn der aktuelle Wert der Winkelgeschwindigkeit bzw. des dynamischen Abrollradius gegenüber einem zu einem früheren Zeitpunkt gespeicherten Ausgangswert des betrachteten Rades oder einem fest vorgegebenen Schwellenwert angestiegen ist oder V2) indem überprüft wird, ob der dynamische Abrollradius ansteigt, nachdem dieser zuvor als Folge eines auf an sich bekannte Weise erkennbaren Druckverlustes abgefallen ist.

3. Verfahren nach Anspruch 1 oder 2, **dadurch gekennzeichnet, daß** die Kraftfahrzeugräder Runflat-Räder mit einer innerhalb des Reifenmantels oder auf der Felge angeordneten Notlauffläche sind.

4. Verfahren nach mindestens einem der Ansprüche 1 bis 3, **dadurch gekennzeichnet, daß** das Druckbestimmungsverfahren zusätzlich weitere Teilverfahren umfaßt, die Druckverluste geringerer Höhe anhand eines Abfalls der Winkelgeschwindigkeit bzw. des dynamischen Abrollradius erkennen, wobei die Schritte der Teilverfahren parallel bzw. quasiparallel ausgeführt werden.

5. Verfahren nach Anspruch 4; **dadurch gekennzeichnet, daß** das Druckverlusterkennungsverfahren ein erstes weiteres Teilverfahren (Prog A) und ein zweites weiteres Teilverfahren (Prog B) umfaßt, wobei beide weiteren Teilverfahren aus den Winkelgeschwindigkeiten oder Informationen, die die Winkelgeschwindigkeiten auf Basis von Zeitintervallen angeben, eine oder mehrere Referenzgrößen $Ref_i$ erzeugen, und die Referenzgröße/-n daraufhin überprüfen, ob obere und untere Grenzwerte $G_1$ und $G_2$ überschritten werden, wobei das zweite weitere Teilverfahren (Prog B) Grenzwerte $^BG_1$ und $^BG_2$ besitzt, die einen engeren Bereich definieren, als die Grenzwerte $^AG_1$ und $^AG_2$ des ersten weiteren Teilverfahrens (Prog A), so daß $^BG_1 < {}^AG_1$ und $^BG_2 > {}^AG_2$ ist.

6. Verfahren nach mindestens einem der Ansprüche 1 bis 5, **dadurch gekennzeichnet, daß** mindestens eines der Teilverfahren ein drittes weiteres Teilverfahren (Prog S) ist, welches ein Geschwindigkeitsmuster des Raddrehzahlverlaufs erkennt, das von einem Fahrzeugreifen mit speziell beschaffener Notlauffläche erzeugt wird.

7. Verfahren nach Anspruch 6, **dadurch gekennzeichnet, daß** die speziell beschaffene Notlauffläche auf der Oberfläche Kavitäten aufweist, welche während des Abrollens der Notlauffläche auf einer Fahrbahn eine für den Notlaufzustand charakteristische Schwingung erzeugen, die mittels Raddrehzahlsensoren erkennbar ist.

8. Verfahren nach mindestens einem der Ansprüche 1 bis 7, **dadurch gekennzeichnet, daß** ein erstes Teilverfahren Prog A) mit einem Ansprechen bei hohem Druckverlust, daß ein zweites Teilverfahren (Prog B) mit einem Ansprechen bei geringerem Druckverlust und ein drittes parallel bzw. quasiparallel ausgeführtes Teilverfahren (Prog S) vorgesehen ist, welches anspricht, wenn bei einem Fahrzeugreifen mit einer speziell beschaffenen Notlauffläche ein Geschwindigkeitsmuster erkannt wird, welches charakteristisch für einen Reifendruckverlust ist.

9. Verfahren nach mindestens einem der Ansprüche 1 bis 8, **dadurch gekennzeichnet, daß** das Verfahren zum Messen des Drucks von Fahrzeugreifen innerhalb eines Verfahrens zur Regelung der Bremskraft und/oder der Fahrdynamik (ABS, ASR, ESP) ausgeführt wird.

10. Verfahren nach mindestens einem der Ansprüche 1 bis 9, **dadurch gekennzeichnet, daß** die Referenzgröße $Ref_i$ gebildet wird, indem die Summen jeweils zweier die Raddrehzahlen repräsentierender Signale dividiert werden.

11. Verfahren nach mindestens einem der Ansprüche 1 bis 10, **dadurch gekennzeichnet, daß** die Ausgänge der Teilverfahren, die eine Informationen über einen Druckverlust enthalten, zu einem gemeinsamen Ausgang ODER-verknüpft (OR) sind.

12. Vorrichtung zum Steuern der Bremskraft und/oder der Fahrdynamik und zum Messen des Drucks von Reifen in einem Kraftfahrzeug, **dadurch gekennzeichnet, daß** ein Mikrorechner, der mit Raddrehzahlsensoren und gegebenenfalls zusätzlichen Fahrdynamiksensoren verbunden ist, ein Verfahren nach den Ansprüchen 1 bis 11 und ein an sich bekanntes Verfahren zur Regelung der Bremskraft und/oder Fahrdynamik abarbeitet.

**Claims**

1. Method for detecting a pressure loss in tyres in an automotive vehicle during travel, in particular for detecting the resting of the tyre casing on an emergency tread present in the tyre, or for detecting the dropping of the tyre pressure below a threshold value (critical tyre pressure), by evaluating sensor-determined angular velocities of the wheels of the automotive vehicle or evaluating information which indicates the angular velocities on the basis of time intervals, **characterised in that** the method for detecting pressure loss is based on detecting a large pressure loss or a complete loss of pressure on the basis of a reduction in the angular velocity or an increase in the dynamic rolling radius $r_d$ in one or more wheels.

2. Method according to claim 1, **characterised in that** a loss of pressure is recognised, V1) when the current value of the angular velocity or of the dynamic rolling radius has increased relative to an initial value of the wheel in question, stored at an earlier point in time, or relative to a fixed prescribed threshold value, or V2) by a check being made as to whether the dynamic rolling radius increases after having dropped away previously as the consequence of a pressure loss which can be detected in a manner known per se.

3. Method according to claim 1 or 2, **characterised in that** the automotive vehicle wheels are run-flat wheels having an emergency tread disposed inside the tyre casing or on the rim.

4. Method according to at least one of claims 1 to 3, **characterised in that** the method for determining pressure includes additionally further sub-methods which detect pressure losses of a lesser amount on the basis of a drop in the angular velocity or in the dynamic rolling radius, the steps of the sub-methods being carried out in parallel or quasi-parallel.

5. Method according to claim 4, **characterised in that** the method for detecting pressure loss includes a first additional sub-method (Prog A) and a second additional sub-method (Prog B), both additional sub-methods generating one or more reference quantities $Ref_i$ from the angular velocities or from information which indicates the angular velocities on the basis of time intervals, and checking the reference quantity/quantities to see whether upper and lower limit values $G_1$ and $G_2$ are exceeded, the second additional sub-method (Prog B) having limit values $^BG_1$ and $^BG_2$ which define a narrower range than the limit values $^AG_1$ and $^AG_2$ of the first additional sub-method (Prog A), such that $^BG_1 < ^AG_1$ and $^BG_2 > ^AG_2$.

6. Method according to at least one of claims 1 to 5, **characterised in that** at least one of the sub-methods is a third additional sub-method (Prog S) which detects a velocity pattern of the course of the wheel rotational speed which is generated by a vehicle tyre having a specially structured emergency tread.

7. Method according to claim 6, **characterised in that** the specially structured emergency tread has cavities on the surface which, as the emergency tread rolls on a roadway, generate an oscillation which is characteristic for the emergency state and can be detected by means of wheel rotational speed sensors.

8. Method according to at least one of claims 1 to 7, **characterised in that** a first sub-method (Prog A) is provided having a response at a high pressure loss, **in that** a second sub-method (Prog B) is provided having a response at a lower pressure loss, and a third sub-method (Prog S) is provided which is carried out in parallel or quasi-parallel and which responds when a velocity pattern is detected for a vehicle tyre having a specially structured emergency tread, which velocity pattern is characteristic for a tyre pressure loss.

9. Method according to at least one of claims 1 to 8, **characterised in that** the method for measuring the pressure of vehicle tyres is carried out within a method for controlling the braking force and/or the driving dynamic (ABS, ASR, ESP).

10. Method according to at least one of claims 1 to 9, **characterised in that** the reference quantity $Ref_i$ is formed by the sums of each two signals, which represent the wheel rotational speeds, being divided.

11. Method according to at least one of claims 1 to 10, **characterised in that** the outputs of the sub-methods, which contain information about a pressure loss, are OR-coupled to a common output.

12. Device for controlling the braking force and/or the driving dynamic and for measuring the pressure of tyres in an automotive vehicle, **characterised in that** a microcomputer, which is connected to wheel rotational speed sensors and possibly additional driving dynamic sensors, processes a method according to claims 1 to 11 and a method known per se for controlling the braking force and/or driving dynamic.

**Revendications**

1. Procédé permettant de détecter, au cours de la conduite, une perte de pression concernant des pneumatiques d'un véhicule automobile, en particulier permettant de détecter le fait que l'enveloppe du pneumatique repose sur une bande de roulement de secours présente dans le pneumatique ou de détecter la diminution de la pression du pneumatique passant au-dessous d'une valeur de seuil (pression de pneumatique critique), par l'analyse de vitesses angulaires des roues du véhicule automobile, déterminées par des capteurs, ou par l'exploitation d'informations qui indiquent les vitesses angulaires, sur la base d'intervalles de temps, **caractérisé en ce que** le procédé permettant de détecter une perte de pression est basé sur le fait de détecter une importante perte de pression ou une perte de pression totale à l'aide d'une diminution de la vitesse angulaire ou d'une augmentation du rayon de roulement dynamique $r_d$, concernant une ou plusieurs roues.

2. Procédé selon la revendication 1, **caractérisé en ce qu'**une perte de pression est détectée, V1) si la valeur, en cours, de la vitesse angulaire ou du rayon de roulement dynamique a augmenté par rapport à une valeur initiale - mémorisée à un moment antérieur - de la roue considérée ou par rapport à une valeur de seuil prédéterminée de façon fixe, ou V2) pendant que l'on contrôle si le rayon de roulement dynamique augmente après que celui-ci a chuté, antérieurement, suite à une perte de pression pouvant être détectée, en soi, de façon connue.

3. Procédé selon la revendication 1 ou 2, **caractérisé en ce que** les roues d'un véhicule automobile sont des roues pouvant rouler à plat et comportant une bande de roulement de secours disposée à l'intérieur de l'enveloppe du pneumatique ou sur la jante.

4. Procédé selon au moins l'une quelconque des revendications 1 à 3, **caractérisé en ce que** le procédé de détermination de la pression comprend en outre d'autres procédés partiels qui détectent des pertes de pression de moindre importance, à l'aide d'une chute de la vitesse angulaire ou du rayon de roulement dynamique, les étapes des procédés partiels étant exécutées de façon parallèle ou quasiment parallèle.

5. Procédé selon la revendication 4, **caractérisé en ce que** le procédé de détection de perte de pression comprend un premier procédé partiel additionnel (Prog A) et un deuxième procédé partiel additionnel (Prog B), où les deux procédés partiels additionnels, à partir des vitesses angulaires ou des informations qui indiquent les vitesses angulaires sur la base d'intervalles de temps, produisent une ou plusieurs variables de référence $Ref_i$ et, à la suite de quoi, contrôlent la variable ou les variables de référence, pour savoir si des valeurs limites supérieures et inférieures $G_1$ et $G_2$ sont dépassées, où le deuxième procédé partiel additionnel (Prog B) possède des valeurs limites $^BG_1$ et $^BG_2$ qui définissent une plage plus étroite que les valeurs limites $^AG_1$ et $^AG_2$ du premier procédé partiel additionnel (Prog A), de sorte que la valeur limite $^BG_1$ est inférieure à la valeur limite $^AG_1$ et la valeur limite $^BG_2$ supérieure à la valeur limite $^AG_2$.

6. Procédé selon au moins l'une quelconque des revendications 1 à 5, **caractérisé en ce qu'**au moins l'un des procédés partiels est un troisième procédé partiel additionnel (Prog S) qui détecte un type de vitesse de la courbe de vitesse de roue, lequel type de vitesse est produit par un pneumatique de véhicule comportant une bande de roulement de secours conçue spécialement.

7. Procédé selon la revendication 6, **caractérisé en ce que** la bande de roulement de secours conçue spécialement présente, sur la surface, des cavités qui, pendant le roulement de la bande de roulement de secours sur une chaussée, produisent une vibration caractéristique de l'état de fonctionnement exceptionnel, laquelle vibration est détectable au moyen de capteurs de vitesses de roues.

8. Procédé selon au moins l'une quelconque des revendications 1 à 7, **caractérisé en ce qu'**un premier procédé partiel (Prog A) se déclenche lors d'une importante perte de pression, qu'un deuxième procédé partiel (Prog B) se déclenche lors d'une faible perte de pression, et il est prévu un troisième procédé partiel (Prog S), exécuté de façon parallèle ou quasiment parallèle, qui se déclenche, concernant un pneumatique de véhicule doté d'une bande de roulement de secours conçue spécialement, lorsque est détecté un type de vitesse qui est caractéristique d'une perte de pression d'un pneumatique.

9. Procédé selon au moins l'une quelconque des revendications 1 à 8, **caractérisé en ce que** le procédé permettant de mesurer la pression de pneumatiques d'un véhicule est exécuté dans le cadre d'un procédé permettant le réglage de la force de freinage et/ou de la dynamique de conduite (ABS, ASR, ESP).

10. Procédé selon au moins l'une quelconque des revendications 1 à 9, **caractérisé en ce que** la variable de référence $Ref_i$ est formée, tandis que les sommes à chaque fois de deux variables de référence sont divisées par des signaux représentant les vitesses de roues.

11. Procédé selon au moins l'une quelconque des revendications 1 à 10, **caractérisé en ce que** les sorties des procédés partiels, qui contiennent une information sur une perte de pression, sont connectées à une sortie commune, par une fonction logique OU.

**12.** Dispositif permettant de contrôler la force de freinage et/ou la dynamique de conduite et de mesurer la pression de pneumatiques d'un véhicule, **caractérisé en ce qu'**un microcalculateur, qui est relié à des capteurs de vitesses de roues et, le cas échéant, à des capteurs supplémentaires de dynamique de conduite, exécute un procédé selon les revendications 1 à 11 et un procédé, en soi connu, permettant de régler la force de freinage et/ou la dynamique de conduite.

Fig. 1

Fig. 2a

Fig. 2b

Fig. 3

Fig. 4